Europäisches Patentamt

European Patent Office

Office européen des brevets

(19)

(11) Veröffentlichungsnummer: **0 307 704**
**A1**

## (12) EUROPÄISCHE PATENTANMELDUNG

(21) Anmeldenummer: **88114065.1**

(22) Anmeldetag: **29.08.88**

(51) Int. Cl.⁴: **H02K 3/52 , H01F 5/04 ,
H02K 5/22**

(30) Priorität: **11.09.87 DE 3730629**

(43) Veröffentlichungstag der Anmeldung:
**22.03.89 Patentblatt 89/12**

(84) Benannte Vertragsstaaten:
**AT DE FR IT**

(71) Anmelder: **Siemens Aktiengesellschaft Berlin
und München**
**Wittelsbacherplatz 2**
**D-8000 München 2(DE)**

(72) Erfinder: **Rohloff, Rolf**
**Flürleinstrasse 16**
**D-8700 Würzburg(DE)**
Erfinder: **Deutloff, Norbert, Dipl.-Ing. (FH)**
**Hoenigsbergstrasse 6a**
**D-8702 Thüngersheim(DE)**
Erfinder: **Heidenfelder, Anton**
**Mittlere Heerbergstrasse 13**
**D-8700 Würzburg(DE)**
Erfinder: **Wenige, Bodo**
**Luxemburger Strasse 9**
**D-8700 Würzburg(DE)**

(54) Spulenkörper.

(57) Es soll auf einfache Weise ein Spulenkörper (2), insbesondere für Elektromotor-Erregerspulen (9) geschaffen werden, der das Bewickeln des Spulenkörpers (2) mit Manipulatoren sowie das Kontaktieren der Wicklungsenden (91,92) der Erregerspule (9) mit den Anschlußenden einer äußeren Anschlußleitung und das zumindest teilweise Abdecken des bewickelten Spulenkörpers (2) mit einer Schutzkappe (1) ermöglicht; dazu wird erfindungsgemäß ein Spulenkörper (2) mit einer parallel um eine zu einem Stirnflansch (21) des Spulenkörpers (2) verlaufenden Drehachse (3) schwenkbaren sowie an dem anderen Stirnflansch (22) verrastbaren Schutzkappe (1) vorgeschlagen, in der Verbindungselemente (6,7) zum Verbinden der Anschlußenden mit den Wicklungsenden (91,92), vorzugsweise im Rastermaß eines Normsteckers gehalten sind; die Schutzkappe (1) ist als Universalbauteil für einen gegebenenfalls zusätzlich aufzunehmenden Thermowächter (10) mit einem dritten Verbindungselement (8) versehen, das in einem der Länge des Thermowächters (10) entsprechenden Abstand zum zweiten Verbindungselement (7) gehalten ist, so daß der Stecker-Anschluß für die äußere Anschlußleitung unverändert bleiben und die Kontaktierung des Thermowächters (10) ohne zusätzliche Verbindungsleitungen erfolgen kann.

FIG 3

## Spulenkörper

Die Erfindung bezieht sich auf einen Spulenkörper gemäß Oberbegriff des Anspruchs 1; ein derartiger Spulenkörper ist durch die DE-OS 26 22 916 bekannt.

Bei dem durch die DE-OS 26 22 916 bekannten Spulenkörper wird nach dem Einbringen der Erregerspule eine Schutzkappe parallel zur Spulenachse an beiden Stirnflanschen befestigt. Ein mittels zusätzlicher Verbindungsleitungen gegebenenfalls zwischengeschalteter Thermowächter wird anschließend in einen Zwischenraum zwischen Schutzkappe und Erregerspule eingesteckt und durch eine zusätzliche Federlasche in der Seitenwandung der Schutzkappe seitlich fest gegen die Erregerspule gedrückt. Nach dem Einstecken des Thermowächters werden die Spulen-Wicklungsenden durch eine Aussparung in der Schutzkappe seitlich herausgeführt; danach wird die Schutzkappe über die offene Seite der Erregerspule geschwenkt und auf der gegenüberliegenden Seite der Stirnflansche festgesteckt. Die herausgeführten Spulen- Wicklungsenden werden mit den Anschlußenden einer äußeren Anschlußleitung in einem auf der betriebsmäßigen Außenseite der Schutzkappe rastbaren Stecker-Schutzgehäuse verbunden.

Aufgabe der vorliegenden Erfindung ist es, auf fertigungs- und montagetechnisch einfache Weise, insbesondere unter Berücksichtigung des Einsatzes von Manipulatoren für eine automatische Fertigung, den Spulenkörper bewickeln und dessen Wicklungsenden mit den Anschlußenden einer äußeren Anschlußleitung kontaktieren sowie den bewickelten Spulenkörper abdecken zu können.

Die Lösung der Aufgabe ist bei einem Spulenkörper der eingangs genannten Art erfindungsgemäß durch die Lehre des Anspruchs 1 möglich; vorteilhafte Ausgestaltungen der Erfindung sind jeweils Gegenstand der Unteransprüche.

Durch die DE-PS 27 58 700 ist zwar ein ringförmiger Spulenkörper für einen Synchron-Kleinmotor bekannt, an dessen einem Stirnflansch ein Schnappbügel angeformt ist und in dem Verbindungselemente mit betriebsmäßig radial nach außen ragenden Anschlußsteckerteilen und radial nach innen ragenden Anwickelstiftteilen eingegossen sind. Zum Anschließen der Wicklungsenden an die Anwickelstiftteile der Verbindungselemente ist der Schnappbügel von dem anderen Stirnflansch wegschwenkbar und sodann mit den angeschlossenen Wicklungsenden auf den anderen Stirnflansch über die offene Seite der Erregerspule zuschwenkbar und an diesem festlegbar. Der Schnappbügel dient der Verbindung der Wicklungsenden mit den Anschlußenden einer äußeren Anschlußleitung und dementsprechend ist die Erregerspule im wesentlichen nur im Bereich der eingegossenen Verbindungselemente abgedeckt. Eine weitere Schutzabdeckung ist jedoch nicht vorgesehen. Auch eignet sich der bekannte Schnappbügel nicht zur Aufnahme von Bauelementen.

Bei dem erfindungsgemäßen Spulenkörper ist ein wesentlicher Teil der Erregerspule durch die Schutzkappe abgedeckt, gleichzeitig eignet sich der Spulenkörper durch die feste örtliche Zuordnung der in der Schutzkappe gehaltenen, vorzugsweise eingegossenen Verbindungselemente zum Spulenkörper für eine automatengerechte Fertigung, da nach dem Wegschwenken der Schutzkappe in ihre seitliche Wickelstellung sowohl der Bereich zwischen den Stirnflanschen zum Einbringen der Erregerspule als auch die betriebsmäßige Innenseite der Schutzkappe mit den herausragenden Anwickelstiftteilen der Verbindungselemente und den herausragenden Führungsstiften zum Anschließen der Wicklungsenden an die Anwickelstiftteile für einen Wicklungsautomaten frei und leicht zugänglich sind; gleichzeitig erhält man durch die erfindungsgemäßen Führungsstifte eine straffe und gezielte Führung der Wicklungsenden derart, daß beim Zurückschwenken der Schutzkappe eine schlaufenfreie Wicklungsendenbewegung gewährleistet ist und die Wicklungsenden somit weder durch Einklemmen beschädigt werden noch untereinander bzw. mit der Erregerspule in Berührung kommen können. Nach dem Zurückschwenken der Schutzkappe in ihre betriebsmäßige Gebrauchsstellung ist die Erregerspule über die an der betriebsmäßigen Außenseite der Schutzkappe herausragenden Anschlußsteckerteile z.B. mittels eines handelsüblichen Normsteckers auf einfache Weise mit den Anschlußenden einer äußeren Anschlußleitung elektrisch verbindbar.

Durch den Aufbau des Spulenkörpers gemäß Anspruch 2 ist die Schutzkappe derart als Universalbauteil ausgebildet, daß der Spulenkörper in vorteilhafter Weise sowohl mit als auch ohne zusätzliches Bauelement, insbesondere einem Thermowächter, gefertigt werden kann. Bei Fertigung des Spulenkörpers mit Bauelement wird dieser auf der betriebsmäßigen Innenseite der Schutzkappe angeordnet und mit seinen Anschlußbeinchen direkt, also ohne zusätzliche Verbindungsleitungen, an das zweite und das dritte Verbindungselement angeschlossen; durch das Anschließen der beiden Wicklungsenden der Erregerspule an dem jeweiligen Anwickelstiftteil des ersten und des dritten Verbindungselementes ist der Thermowächter elektrisch in Reihe mit der Erregerspule geschaltet. Bei Fertigung des Spulenkörpers ohne Thermowächter wird die Kontaktierung des ersten Wicklungsendes an dem Anwickelstiftteil des ersten Verbindungselementes beibehalten und in einfacher Weise nur der Anschluß des zweiten Wicklungsendes von dem Anwickelstiftteil des dritten Verbindungselementes auf das Anwickelstiftteil des zweiten Verbindungselementes geändert. Der Anschluß der Anschlußenden einer äußeren Anschlußleitung und damit die Verbindung mit den Wicklungsenden der Erregerspule erfolgt somit unabhängig von der Montage eines Thermowächters immer an den Anschlußsteckerteilen des ersten und des zweiten Verbindungselementes.

Die Zahl der Handhabungsschritte kann dadurch weiter reduziert werden, daß die Schutzkappe nicht als getrenntes Bauteil aufgerastet ist, sondern über ein Filmscharnier einstückig an einen der beiden Stirnflansche des Spulenkörpers angeformt ist.

Ohne wesentlichen zusätzlichen Fertigungs- und Montageaufwand kann ein zusätzlicher Tropfschutz in einfacher Weise dadurch erreicht werden, daß an den beiden parallel zur Spulenachse der Erregerspule liegenden Seiten der Schutzkappe jeweils ein Seitenschutzlappen einstückig über ein Filmscharnier an die Schutzkappe angespritzt ist.

Die Erfindung sowie weitere vorteilhafte Ausgestaltungen werden im folgenden anhand schematisch dargestellter Ausführungsbeispiele in der Zeichnung näher erläutert. Darin zeigen:

FIG 1 eine Draufsicht auf eine erste Ausführungsform eines Spulenkörpers mit in Wickelstellung geschwenkter Schutzkappe,

FIG 2 eine Seitenansicht des Spulenkörpers nach FIG 1 mit in betriebsmäßiger Gebrauchsstellung geschwenkter Schutzkappe,

FIG 3 eine Draufsicht auf eine zweite Ausführungsform eines Spulenkörpers mit in Wickelstellung geschwenkter Schutzkappe, auf dessen betriebsmäßiger Innenseite ein Thermowächter angeordnet ist,

FIG 4 eine Seitenansicht des Spulenkörpers mit Teilschnitt gemäß Schnittverlauf IV-IV in FIG 3, wobei die Wickelstellung der Schutzkappe durch einen ausgezogenen Linienzug und die betriebsmäßige Gebrauchsstellung der Schutzkappe durch einen strichpunktierten Linienzug dargestellt ist.

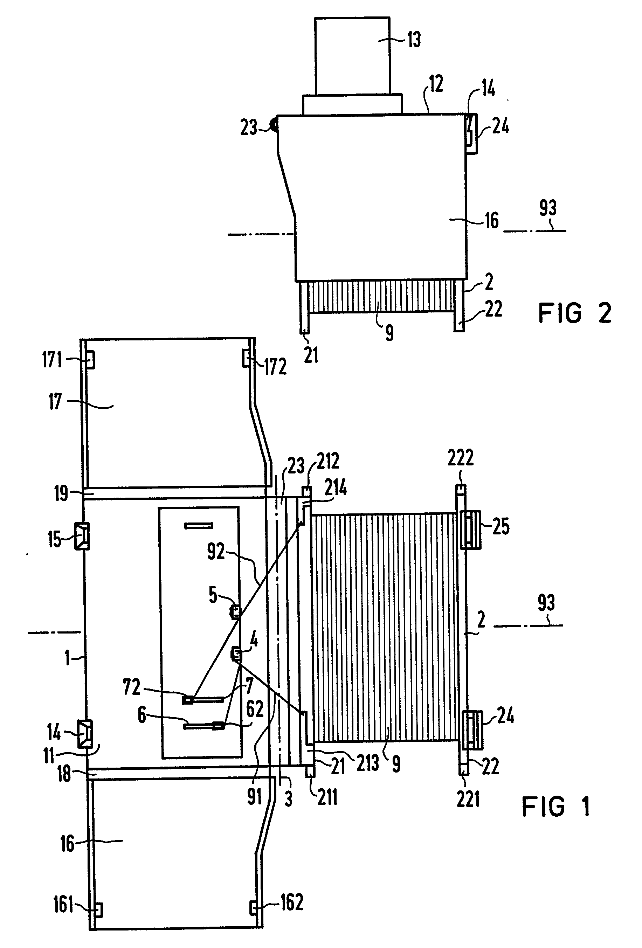

FIG 1 zeigt in einer Draufsicht eine erste Ausführungsform eines rechteckförmigen Spulenkörpers 2 mit einer zwischen seinen beiden Stirnflanschen 21, 22 eingebrachten Erregerspule 9. An dem einen Stirnflansch 21 ist über ein Filmscharnier 23 eine Schutzkappe 1 einstückig angeformt. Die Schutzkappe 1 ist um ihre Drehachse 3 von dem Stirnflansch 22 parallel zu diesem in eine seitliche Wickelstellung weggeschwenkt, derart daß die betriebsmäßige Innenseite 11 der Schutzkappe 1 sichtbar wird. In der Schutzkappe 1 sind Verbindungselemente 6, 7 gehalten, die mit Anschlußsteckerteilen aus der betriebsmäßigen Außenseite und mit hier sichtbaren Anwickelstiftteilen 62, 72 aus der betriebsmäßigen Innenseite 11 der Schutzkappe 1 herausragen. Zusätzlich sind auf der betriebsmäßigen Innenseite 11 der Schutzkappe 1 zwischen der Drehachse 3 und den Anwickelstiftteilen 62, 72 Führungsstifte 4, 5 angeordnet und an den bei der Drehachse 3 liegenden Ecken des Stirnflansches 21 Hinterschneidungen 213, 214 vorgesehen. An die beiden parallel zur Spulenachse 93 der Erregerspule 9 liegenden Seiten der Schutzkappe 1 ist jeweils ein Seitenschutzlappen 16, 17 einstückig über Filmscharniere 18, 19 angespritzt. An der parallel zur Drehachse 3 liegenden, Seite der Schutzkappe 1 sind Rastnasen 14, 15 angeformt, denen korrespondierende Rastnuten 24, 25 an dem Stirnflansch 22 zugeordnet sind.

Wie ohne weiteres ersichtlich, sind sowohl der Bereich zwischen den Stirnflanschen 21, 22 zum Einbringen der Erregerspule 9 als auch die betriebsmäßige Innenseite 11 der Schutzkappe 1 zum Anschließen der Wicklungsenden 91, 92 an die Anwickelstiftteile 62, 72 für einen Wicklungsautomaten frei und leicht zugänglich.

Bei der Fertigung des Spulenkörpers 2 wird zunächst der Bereich zwischen den beiden Stirnflanschen 21, 22 bewickelt; anschließend werden die Wicklungsenden 91, 92 durch die Hinterschneidungen 213, 214 im spitzen Winkel zur Drehachse 3 an den jeweils nächstliegenden Führungsstift 4 bzw.5 geführt und an das entsprechende Anwickelstiftteil 62 bzw.72 angeschlossen. Nach dem Anschließen der Wicklungsenden 91, 92 an die Anwickelstiftteile 62, 72 wird die Schutzkappe 1 aus ihrer Wickelstellung über die offene Seite der Erregerspule 9 auf den Stirnflansch 22 zugeschwenkt und mittels der Rastnasen 14, 15 und der korrespondierenden Rastnuten 24, 25 am Stirnflansch 22 verrastet.

Durch die erfindungsgemäße Führung der Wicklungsenden 91, 92 um die Führungsstifte 4, 5 ist beim Zurückschwenken der Schutzkappe 1 aus ihrer Wickelstellung in ihre betriebsmäßige Gebrauchsstellung eine schlaufenfreie Wicklungsendenbewegung gewährleistet; die Wicklungsenden 91, 92 werden somit weder zwischen der Schutzkappe 1 und dem Stirnflansch 21 eingeklemmt noch berühren sie die Erregerspule 9.

Nach dem Verrasten der Schutzkappe 1 am Stirnflansch 22 werden die Seitenschutzlappen 16, 17 an den Spulenkörper 2 herangeschwenkt und mittels der an ihnen angeordneten Rastnuten 161, 162, 171, 172 an den korrespondierenden, an den Stirnflanschen 21, 22 angeformten Rastnasen 211, 212, 221, 222 festgelegt.

FIG 2 zeigt in einer Seitenansicht den Spulenkörper 2 gemäß FIG 1 mit in Betriebsstellung geschwenkter und festgelegter Schutzkappe 1 und festgelegten Seitenschutzlappen 16, 17, wobei in der Seitenansicht nur der Seitenschutzlappen 16 sichtbar ist. An die Außenseite 12 der Schutzkappe 1 ist in vorteilhafter Weise ein die Anschlußsteckerteile 61, 71 ummantelndes SteckerSchutzgehäuse 13 angeformt, durch das ein guter Berührungsschutz der Anschlußsteckerteile 61, 71 auf einfache Weise gewährleistet ist.

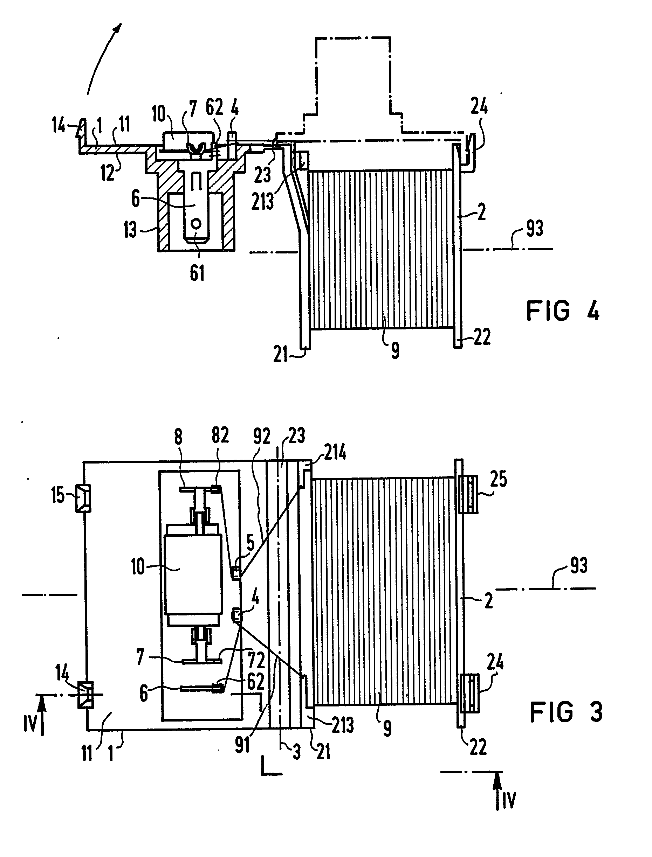

FIG 3 zeigt in einer Draufsicht eine zweite Ausführungsform des Spulenkörpers 2, jedoch mit einer als Universalbauteil ausgebildeten Schutzkappe 1, die ebenfalls in Wickelstellung weggeschwenkt ist. Zu den aus FIG 1 bekannten Verbindungselementen 6, 7 ist ein zusätzliches Verbindungselement 8 in der Schutzkappe 1 gehalten, das ohne Anschlußsteckerteil ausgeführt werden kann und dessen Anwickelstiftteil 82 ebenfalls aus der betriebsmäßigen Innenseite 11 der Schutzkappe 1 herausragt. Zwischen dem zweiten Verbindungselement 7 und dem dritten Verbindungselement 8 ist ein Thermowächter 10 derart angeordnet und mit seinen Anschlußbeinchen mit den Verbindungselementen 7, 8 elektrisch kontaktiert, daß der Thermowächter 10 nur durch Anschließen der beiden Wicklungsenden 91, 92 der Erregerspule 9 an dem jeweiligen Anwickelstiftteil 62, 82 elektrisch in Reihe mit der Erregerspule 9 geschaltet ist. Wie aus FIG 3 ersichtlich, ergibt sich bei einer Rechteckform des Spulenkörpers 2 eine für einen Wicklungsautomaten besonders günstige Anordnung der Verbindungselemente 6, 7, 8, da sowohl der Thermowächter 10 mit seiner Längsachse als auch die Anwickelstiftteile 62, 72, 82 der Verbindungselemente 6, 7, 8 parallel zur Drehachse 3 der Schutzkappe 1 und damit parallel zur Bewicklungsrichtung des Spulenkörpers 2 angeordnet sein können.

Bei Verwendung der Schutzkappe 1 als Universalbauteil sowohl in Bauausführung mit als auch ohne Thermowächter 10 wird unter Beibehaltung der insgesamt drei in der Schutzkappe 1 verankerten Verbindungselemente 6, 7, 8 im Falle einer Ausführung ohne Thermowächter 10 bei unveränderter Kontaktierung des ersten Wicklungsendes 91 an dem Anwickelstiftteil 62 in einfacher Weise der Anschluß des zweiten Wicklungsendes 92 vom Anwickelstiftteil 82 auf den Anwickelstiftteil 72 geändert; der Anschluß der Anschlußenden einer äußeren Anschlußleitung kann unabhängig von der Montage eines Thermowächters 10 somit erfindungsgemäß immer in gleicher Weise mittels der Anschlußsteckerteile 61, 71 erfolgen.

FIG 4 zeigt den Spulenkörper 2 gemäß FIG 3 mit in Wickelstellung geschwenkter Schutzkappe 1. In der Schnittdarstellung der Schutzkappe 1 ist nur das Verbindungselement 6 mit seinem Anschlußsteckerteil 61 und seinem Anwickelstiftteil 62 sichtbar; das dahinter angeordnete Verbindungselement 7 mit seinem Anschlußsteckerteil 71 und seinem Anwickelstiftteil 72 sowie das ebenfalls dahinter angeordnete Verbindungselement 8 mit seinem Anwickelstiftteil 82 werden in dieser Darstellung durch das Verbindungselement 6 verdeckt. Die Schutzkappe 1 ist in Pfeilrichtung über die offene Seite der Erregerspule 9 auf den Stirnflansch 22 zuschwenkbar und festlegbar. Die Festlegung der Schutzkappe 1 in ihrer durch einen strichpunktierten Linienzug dargestellten betriebsmäßigen Gebrauchsstellung erfolgt wie in FIG 1 beschrieben. An der betriebsmäßigen Außenseite 12 der Schutzkappe 1 ist ebenfalls ein die Anschlußsteckerteile 61, 71 ummantelndes Stecker-Schutzgehäuse 13 angeformt, das auf einfache Weise einen guten Berührungsschutz der Anschlußsteckerteile 61, 71 gewährleistet.

## Ansprüche

1. Spulenkörper (2), insbesondere für Erregerspulen (9) von Elektrokleinmotoren mit asymmetrischem Blechschnitt, mit einer zwischen ihre beiden Stirnflansche (21; 22) eingebrachten Erregerspule (9) und mit einer an den Stirnflanschen (21; 22) befestigten, um eine Drehachse (3) aus einer Wickelstellung in eine die Erregerspule (9) abdeckende betriebsmäßige Gebrauchsstellung schwenkbaren Schutzkappe (1) sowie mit in der Schutzkappe (1) gehaltenen Verbindungselementen (6; 7), an die Wicklungsenden (91; 92) der Erregerspule (9) einerseits und Anschlußenden einer äußeren Anschlußleitung andererseits anschließbar sind, **gekennzeichnet** durch folgende Merkmale:

a) Die Schutzkappe (1) ist jeweils an einem der beiden Stirnflansche (21; 22) um eine parallel zu diesem Stirnflansch (21 bzw.22) verlaufende Drehachse (3) schwenkbar angeordnet;

b) in der Schutzkappe (1) sind zumindest ein erstes und ein zweites Verbindungselement (6; 7), vorzugsweise mit einem gegenseitigen Abstand im Rastermaß eines handelsüblichen, zumindest zweipoligen Anschlußsteckers, gehalten, von denen jedes Verbindungselement (6; 7) mit jeweils einem Anschlußsteckerteil (61; 71) zum Anschließen der Anschlußenden der äußeren Anschlußleitung aus einer betriebsmäßigen Außenseite (12) und mit jeweils einem Anwickelstiftteil (62; 72) zum Anwickeln eines ersten und eines zweiten Wicklungsendes (91; 92) der Erregerspule (9) aus einer betriebsmäßigen Innenseite (11) herausragen;

c) auf der betriebsmäßigen Innenseite (11) der Schutzkappe (1) sind zwischen der Drehachse (3) und den Anwickelstiftteilen (62; 72) von den Wicklungsenden (91; 92) umwickelte Führungsstifte (4; 5) im Sinne einer schlaufenfreien Wicklungsendenbewegung beim Zurückschwenken der Schutzkappe (1) aus der Wickel- in die betriebsmäßige Gebrauchsstellung angeordnet.

2. Spulenkörper (2) nach Anspruch 1, insbesondere zur Verwendung bei einem zusätzlich in der Schutzkappe (1) zu haltenden Bauelement, z.B. ein elektrisch in Reihe mit der Erregerspule (9) geschalteter Thermowächter (10), **gekennzeichnet** durch folgende Merkmale:

d) In der Schutzkappe (1) ist ein drittes Verbindungselement (8) in einem der Länge des Thermowächters (10) im wesentlichen entsprechenden Abstand zum zweiten Verbindungselement (7) gehalten, das mit einem Anwickelstiftteil (82) aus der betriebsmäßigen Innenseite (11) der Schutzkappe (1) herausragt;

e) der Thermowächter (10) ist auf der betriebsmäßigen Innenseite (11) der Schutzkappe (1) zwischen dem zweiten Verbindungselement (7) und dem dritten Verbindungselement (8) angeordnet und angeschlossen;

f) das erste Wicklungsende (91) ist an den Anwickelstiftteil (62) des ersten Verbindungselementes (6) und das zweite Wicklungsende (92) ist an den Anwickelstiftteil (82) des dritten Verbindungselementes (8) angeschlossen.

3. Spulenkörper (2) nach Anspruch 1 oder 2, **dadurch gekennzeichnet,** daß die Wicklungsenden (91; 92) im spitzen Winkel zur Drehachse (3) an die Führungsstifte (4; 5) geführt sind.

4. Spulenkörper (2) nach einem der Ansprüche 1 bis 3, **dadurch gekennzeichnet,** daß der Spulenkörper eine Rechteckform mit senkrecht zu einer Spulenachse (93) verlaufenden Drehachse (3) aufweist.

5. Spulenkörper (2) nach einem der Ansprüche 1 bis 3, insbesondere nach Anspruch 4, **dadurch gekennzeichnet,** daß Hinterschneidungen (213; 214) an beiden, bei der Drehachse (3) liegenden Ecken des Stirnflansches (21) vorgesehen sind und die jeweils durch eine Hinterschneidung (213; 214) geführten Wick lungsenden (91; 92) kreuzungsfrei an die radial weiter innen angeordneten Führungsstifte geführt und an das entsprechende Anwickelstiftteil (62 und 72 bzw. 82) angeschlossen sind.

6. Spulenkörper (2) nach einem der Ansprüche 1 bis 5, **dadurch gekennzeichnet,** daß die Schutzkappe (1) über ein Filmscharnier (23) einstückig an einem der beiden Stirnflansche (21; 22) des Spulenkörpers (2) angeformt ist.

7. Spulenkörper (2) nach einem der Ansprüche 1 bis 6, **dadurch gekennzeichnet,** daß an die betriebsmäßige Aussenseite (12) der Schutzkappe (1) ein die Anschlußsteckerteile (61; 71) ummantelndes Stecker-Schutzgehäuse (13) angeformt ist.

8. Spulenkörper (2) nach einem der Ansprüche 1 bis 7, **dadurch gekennzeichnet,** daß an den beiden parallel zur Spulenachse (93) der Erregerspule (9) liegenden Seiten der Schutzkappe (1) jeweils ein Seitenschutzlappen (15; 16) derart angeordnet ist, daß bei in Betriebsstellung geschwenkter Schutzkappe (1) die ansonsten freibleibenden Seiten der Erregerspule (9) zumindest teilweise zusätzlich abdeckbar sind.

9. Spulenkörper (2) nach Anspruch 8, **dadurch gekennzeichnet,** daß die Seitenschutzlappen (16; 17) einstückig über Filmscharniere (18; 19) an die Schutzkappe (1) angespritzt sind.

10. Spulenkörper (2) nach einem der Ansprüche 1 bis 9, **dadurch gekennzeichnet,** daß an die Schutzkappe (1) angeformte Rastnasen (14; 15) und zu diesen korrespondierende, an den Spulenkörper (2) angeordnete Rastnuten (24; 25) und/oder an den Seitenschutzlappen (16; 17) angeordnete Rastnuten (161; 162; 171; 172) und zu diesen korrespondierende, an den Stirnflanschen (21; 22) angeformte Rastnasen (211; 212; 221; 222) vorgesehen sind, durch die in der Betriebsstellung die Schutzkappe (1) und/oder die Seitenschutzlappen (16; 17) festlegbar sind.

87 P 3323

FIG 2

FIG 1

87 P 3323

FIG 4

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 10, Nr. 113, (E-399)[2170], 26. April 1986, Seite 162 E 399; & JP-A-60 249 303 (CANON K.K.) 10-12-1985 * Zusammenfassung * --- | 1,6,7, 10 | H 02 K 3/52<br>H 01 F 5/04<br>H 02 K 5/22 |
| A | DE-A-2 535 609 (PAPST-MOTOREN KG) * Seite 3, Zeile 4 - Seite 6, Zeile 19 * --- | 2,10 | |
| D,A | DE-A-2 622 916 (THOMSON-BRANDT) * Figur 1 * --- | 5,8 | |
| A | EP-A-0 179 259 (SIEMENS) --- | | |
| A | EP-A-0 174 512 (SIEMENS) --- | | |
| A | DE-A-3 446 105 (LEONHARDY) --- | | |
| A | US-A-3 453 575 (ELECTRICAL COIL CO.) ----- | | |

**RECHERCHIERTE SACHGEBIETE (Int. Cl.4)**

H 02 K 3/00
H 01 F 5/00
H 02 K 5/00
H 01 F 15/00
H 01 F 41/00

Der vorliegende Recherchenbericht wurde für alle Patentansprüche erstellt

| Recherchenort | Abschlußdatum der Recherche | Prüfer |
|---|---|---|
| DEN HAAG | 14-12-1988 | VANHULLE R. |